(19) Europäisches Patentamt
European Patent Office
Office européen des brevets

(11) **EP 2 628 580 B1**

(12) **EUROPÄISCHE PATENTSCHRIFT**

(45) Veröffentlichungstag und Bekanntmachung des Hinweises auf die Patenterteilung:
**12.04.2017 Patentblatt 2017/15**

(51) Int Cl.:
***B27N 7/00*** *(2006.01)* ***B32B 21/04*** *(2006.01)*

(21) Anmeldenummer: **13168299.9**

(22) Anmeldetag: **21.06.2011**

(54) **Holzwerkstoffplatte**

Composite wood board

Plaque à base de bois

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**21.08.2013 Patentblatt 2013/34**

(60) Teilanmeldung:
**15199935.6 / 3 045 279**

(62) Dokumentnummer(n) der früheren Anmeldung(en) nach Art. 76 EPÜ:
**11170818.6 / 2 537 653**

(73) Patentinhaber: **Flooring Technologies Ltd.**
**Kalkara SCM1001 (MT)**

(72) Erfinder: **Braun, Roger**
**6130 Willisau (CH)**

(74) Vertreter: **Kalkoff & Partner**
**Patentanwälte**
**Martin-Schmeisser-Weg 3a-3b**
**44227 Dortmund (DE)**

(56) Entgegenhaltungen:
**EP-A1- 2 147 762       WO-A1-2009/103849**
**WO-A1-2009/158251    DE-A1-102010 034 998**
**US-A- 5 554 686        US-A1- 2002 176 995**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft ein Wand-, Decken- oder Fußbodenpaneel aus einer Holzwerkstoffplatte mit einer Oberseite und einer Rückseite und mit abschnittsweise eingebrachten Verstärkungen.

Als Trägerplatten solcher Laminate werden zumeist Holzwerkstoffe, wie bspw. Spanplatten oder Faserplatten genutzt. Auf die Trägerplatten wird ein Dekor durch direktes Bedrucken der Holzwerkstoffplatte oder bspw. auch durch Aufbringen von bedrucktem Papier, sogenannten Dekorpapier erzeugt. Oberhalb des Dekors wird zumeist eine Schutzschicht aufgebracht. Dies kann beispielsweise eine Lackschicht oder auch ein Overlay sein. Diese Schutzschicht soll das Dekor vor mechanischen Beschädigungen und dem Eindringen von Feuchtigkeit schützen. Im Anschluss an das Verpressen wird die Holzwerkstoffplatte aufgeschnitten und die Kanten der Abschnitte profiliert, so dass Paneele bspw. zum Verlegen auf dem Fußboden entstehen. Die Profilierungen haben vorrangig den Zweck, die Paneele dauerhaft, jedoch ggf. wieder lösbar miteinander zu verbinden, um eine geschlossene Paneel-Schicht herzustellen. Die Profilierungen sind im Gebrauchszustand hohen Belastungen ausgesetzt und müssen bspw. die Paneele beim Begehen sicher verbinden oder bspw. auch die Paneele vor eindringender Feuchtigkeit schützen.

Als Holzwerkstoff werden vorrangig hoch verdichtete Faserplatten, hergestellt im Trockenverfahren (HDF) genutzt, da diese bei besonders dünner Auslegung eine hohe mechanische Festigkeit der Kantenprofile ermöglichen. HDF weisen zumeist eine Rohdichte von 800 kg/m$^3$ oder mehr auf und haben ein entsprechend hohes Gewicht. Beim Profilieren mit einem Fräswerkzeug neigen die Kanten einer HDF zum Ausreißen. Ein weiterer Nachteil von HDF ist, dass diese hygroskopisch sind, so dass insbesondere die ungeschützten profilierten Kanten dazu neigen, Feuchtigkeit schnell aufzunehmen und zu quellen. Um das Quellen der Faserplatten im Kantenbereich zu verhindern, sind mehrere Verfahren bekannt.

Die Druckschrift WO 03/012224 A1 von Välinge zeigt unterschiedlichste Ausführungsformen für den Feuchtigkeitsschutz der profilierten Kanten. Sie schlägt unter anderem vor, die Holzwerkstoffplatte entweder vor dem Zerschneiden oder im Anschluss daran die profilierten Kanten direkt mit Imprägnaten unterschiedlicher Viskosität einzusprühen, um ein besonders tiefes Eindringen des Imprägnats zu ermöglichen. Die vorgeschlagenen Imprägnate können bspw. aus Polyurethan, Phenol und Melamin bestehen. Problematisch hierbei ist jedoch, das Imprägnat ausreichend tief in die Platte einzubringen, um einen sicheren Schutz vor Feuchtigkeitsaufnahme herzustellen. Deshalb schlägt sie weiter vor, ein zusätzliches Dichtungsmittel in die Profile der Paneele einzuarbeiten, das eindringende Feuchtigkeit zurückhält.

Insgesamt sind die unterschiedlichen Verfahren jedoch ausgesprochen aufwendig bzw. nicht ausreichend wirksam, da zum einen unterschiedlich viskose Imprägnate verwendet werden müssen und zum anderen ein zusätzliches Dichtungsmittel in einem weiteren Arbeitsschritt in die Paneelkante eingebracht werden muss. Hinzu kommt, dass insbesondere das Einbringen der vorgeschlagenen Imprägnate schwierig ist, nicht in den normalen Herstellungsprozess von Paneelen integriert werden kann und zum Teil Probleme beim Verpressen bzw. Verbinden des Dekorpapiers mit der Holzwerkstoffplatte bereitet.

In den Druckschriften DE 10 2008 038 749 B3 und der Druckschrift EP 2 036 689 A1 werden zwei Verfahren vorgeschlagen, bei denen ein Imprägnat durch Anlegen einer Vorrichtung zum Erzeugen eines Unterdrucks an der Holzwerkstoffplatte, vollständig, durch die Holzwerkstoffplatte gesaugt werden soll. Der Nachteil an diesem Verfahren ist der hohe technische Aufwand, der nötig ist, um einen sicheren Unterdruck an eine Holzwerkstoffplatte anzulegen. Hinzu kommt, dass eine solche Maßnahme nur schwer in den normalen Beschichtungsprozess eingefügt werden kann, ohne die Prozessgeschwindigkeit deutlich herabzusetzen.

Es ist somit Aufgabe der Erfindung ein Paneel aus einer Holzwerkstoffplatte bereitzustellen, bei dem ein Verstärkungsmittel auf besonders einfache und kostengünstige Weise in die Holzwerkstoffplatte eingetragen ist. Weiter ist es Aufgabe der Erfindung ein Paneel mit partiellen Verstärkungen bereitzustellen, bei dem Delaminierungen zwischen einzelnen Paneelschichten vermieden werden.

Die Aufgabe wird gelöst durch ein Paneel gemäß Anspruch 1. Vorteilhafte Weiterbildungen der Erfindung sind in den unabhängigen Ansprüchen angegeben.

Das Verfahren zum Herstellen einer Holzwerkstoffplatte mit einem verstärkten Bereich z. B. für Wand-, Decken- oder Fußbodenpaneele aus einer Holzwerkstoffplatte mit einer Oberseite und einer der Oberseite gegenüberliegenden Rückseite umfasst mindestens die Schritte: Mindestens abschnittsweises Auftragen eines flüssigen Verstärkungsmittels auf die Oberseite der Holzwerkstoffplatte, Erzeugen eines Laminat-Sandwichs durch Aufbringen mindestens eines Dekorpapiers und Auftragen mindestens eines Overlays auf die Oberseite der Holzwerkstoffplatte, Einbringen des Laminat-Sandwichs in eine Presse und Verpressen des Laminats und ist dadurch gekennzeichnet, dass beim Verpressen ein Dampfstoß erzeugt wird, der Dampfstoß das Verstärkungsmittel in Richtung der Rückseite in die Holzwerkstoffplatte einträgt und das Verstärkungsmittel während des Pressvorgangs aushärtet.

Die vorhandenen Schichten des Laminat-Sandwichs werden in der Presse unter Druck und Wärme miteinander verpresst. Dabei wird ein Dampfstoß durch das Verdampfen von Flüssigkeit, insbesondere von Wasser, erzeugt. Der erfindungsgemäß benötigte Dampfstoß wird oberseitig, d.h. an der Seite der Holzwerkstoffplatte erzeugt, auf der das Dekor und die Schutzschicht angeordnet sind. Der Dampfstoß dringt ausgehend von der Oberseite in Richtung der Rückseite in die Holzwerkstoffplatte ein. Aufgrund der Geschwindigkeit und des Drucks, mit dem der Dampfstoß in die Platte eindringt, nimmt er das flüssige Verstärkungsmittel auf der Oberseite der Holzwerkstoffplatte mit und trägt es in die Holzwerkstoffplatte hinein. Abhängig von der Stärke und Intensität des Dampfstoßes kann die Eindringtiefe des flüssigen Verstärkungsmittels gesteuert werden. Hierdurch wird auf besonders einfache Weise ein tiefes Eindringen des Verstärkungsmittels in die Holzwerkstoffplatte ermöglicht, ohne den üblichen Herstellungsprozess zu verlangsamen. Vielmehr wird die Zeit, die das Laminat-Sandwich ohnehin in der Presse verweilt, parallel für einen zusätzlichen Prozessschritt genutzt.

Durch die Menge der eindringenden Feuchtigkeit, die Wärme des Dampfstoßes und abhängig vom verwendeten Verstärkungsmittel, ist ein besonders schnelles und vollständiges Aushärten/Vernetzen des Verstärkungsmittels möglich.

Der nach dem Verfahren verwendete Dampfstoß wird insbesondere im Bereich oberhalb der Oberfläche der Holzwerkstoffplatte und unterhalb des Overlays erzeugt. Hierfür wird das Dekorpapier verwendet, in dem sich noch Feuchtigkeit aus der Papierherstellung befindet. Das üblicherweise im Dekorpapier enthaltene Wasser reicht in den meisten Fällen aus, um das Verstärkungsmittel tief in die Platte hineinzutreiben bzw. beim Eindringen mitzunehmen oder einzutragen.

Diese Feuchtigkeit wird durch die Hitze der Presse schnell verdampft, der entstehende Dampf hat aufgrund des Overlays und der oberhalb angeordneten Pressplatte nur die Möglichkeit, in die Platte einzudringen und sich dort zu verteilen, um einen Druckabbau zu erreichen. Die Kraft und Intensität des Dampfstoßes beim Eindringen in die Platte kann bspw. über die Menge der zu verdampfenden Flüssigkeit und die Verdampfungstemperatur gesteuert werden und reicht aus, um das Verstärkungsmittel tief in die Platte hineinzutreiben bzw. beim Eindringen mitzunehmen oder einzutragen.

Zur Verstärkung der Kraft, der Intensität und/oder des Volumens des Dampfstoßes wäre es auch denkbar, beispielsweise das Dekorpapier und/oder die Unterseite des Dekorpapiers zumindest abschnittsweise zusätzlich mit Feuchtigkeit zu versehen oder unterhalb des Dekorpapiers und oberhalb des flüssigen Verstärkungsmittels eine zusätzliche Feuchtigkeitsträgerschicht anzuordnen oder Feuchtigkeit auf die Holzwerkstoffplatte aufzubringen.

Das im Verfahren verwendete flüssige Verstärkungsmittel kann auf bekannte Weise auf die Oberfläche der Oberseite der Holzwerkstoffplatte aufgetragen werden, beispielsweise durch Aufsprühen, Aufwalzen oder Aufrakeln. Grundsätzlich kann jedes mögliche bekannte Verfahren zum Auftragen von Flüssigkeiten auf die Holzwerkstoffplatte angewendet werden.

Es wird in den Bereichen der Holzwerkstoffplatte aufgetragen, in denen später eine Kante eines Paneels entsteht und/oder ein Profil angefräst werden soll. Unter dem Aushärten des Verstärkungsmittels kann sowohl das physikalische Abbinden als auch das chemische Aushärten, d.h. das chemische Vernetzen des Verstärkungsmittels verstanden werden. Bei dem Verfahren liegt das Verstärkungsmittel vor dem Verpressen in flüssiger Form vor und ist nach Möglichkeit insbesondere nicht vorvernetzt und/oder teilausgehärtet.

Das Verstärkungsmittel wird in Richtung der Rückseite in die Holzwerkstoffplatte eingetragen. Das bedeutet, dass das Verstärkungsmittel, welches z. B. hoch konzentriert an der Oberseite der Holzwerkstoffplatte vorliegt, von der Oberseite weg in die Holzwerkstoffplatte hinein eingetragen wird. Das Verstärkungsmittel folgt dabei dem Weg des Dampfstoßes. Durch den Dampfstoß findet auch kein komplettes Verschieben des Verstärkungsmittels von der Oberseite in eine andere Ebene der Platte statt, sondern der Dampfstoß verteilt das Verstärkungsmittel ausgehend von der Oberseite in Richtung der Rückseite und entlang seines Weges durch die Holzwerkstoffplatte. Nachdem das Verstärkungsmittel verteilt ist, härtet es aus, beispielsweise unter Einwirkung erhöhter Temperatur oder durch das Einwirken eines Katalysators oder anderen Faktoren. Nach dem Aushärten liegt das Verstärkungsmittel sowohl an der Oberseite der Holzwerkstoffplatte als auch in tieferen Ebenen der Holzwerkstoffplatte vor. Überraschenderweise bewirkt der Dampfstoß eine besonders gleichmäßige Verteilung über den gesamten zu verstärkenden Bereich.

Das flüssige Verstärkungsmittel enthält mindestens ein aktives Agens aus der Gruppe der Silane. Als Verstärkungsmittel können bekannte, beispielsweise zum Verkleben der einzelnen Schichten oder der Holzwerkstoffplatte verwendete Polymere verwendet werden, ggf. in Mischung mit Silanen.

Das Verstärkungsmittel kann auch ausschließlich aus einem Silan oder mehreren Silanen bestehen. Hierdurch wird eine Verstärkung, d. h. eine Verfestigung und/oder eine Versiegelung zum Schutz vor bspw. Feuchtigkeitsaufnahme, erreicht. Gegebenenfalls sind auch diese stoffreinen aktiven Agenzien mit einem Lösungsmittel als passives Auge vermengt.

Unter dem aktiven Agens wird hierbei ein zum Zwecke der Verstärkung und Versiegelung wirkende Komponente, das Verstärkungsmittel, verstanden. Unter einem passiven Agens wäre somit bspw. das Lösungsmittel oder auch ein Farbstoff zu verstehen.

Durch das Hinzufügen oder die ausschließliche Verwendung eines aktiven Agens aus der Gruppe der Silane oder einer Mischung von zwei oder mehr aktiven Agenzien wird ein hoher Vernetzungsgrad des Verstärkungsmittels an sich und mit der Holzwerkstoffplatte erreicht. Dadurch wird der mit Verstärkungsmittel versehende Bereich der Holzwerkstoffplatte besonders gut versiegelt, ist vor Feuchtigkeit geschützt und weist deutlich höhere Festigkeits- und Stabilitätseigenschaften auf, gegenüber dem Bereich der Holzwerkstoffplatte ohne Verstärkungsmittel. Auch sind die Eigenschaften (Festigkeit, Stabilität, Hygroskopizität) des verstärkten Bereichs bei der Verwendung des Verstärkungsmittels mit einem aktiven Agens aus der Gruppe der Silane deutlich verbessert gegenüber einem Bereich, der mit einem Verstärkungsmittel behandelt wurde, das ein solches Agens nicht enthält.

Ein weiterer besonderer Vorteil eines aktiven Agens aus der Gruppe der Silane in der Kombination mit dem Dampfstoß ist, dass Silane in Verbindung mit Feuchtigkeit besonders gut und besonders schnell vollständig aushärten. Hierdurch ist es in vorteilhafter Weise möglich, auch besonders kurze Presszeiten des Laminat-Sandwichs beizubehalten. Außerdem werden ein Nachvernetzen des flüssigen Verstärkungsmittels und ein gegebenenfalls auftretendes Ausdampfen von schädlichen Emissionen außerhalb der Presse vermieden.

Ein weiterer besonderer Vorteil eines aktiven Agens aus der Gruppe der Silane ist, dass diese im ausgehärteten Zustand eine besonders feste und sichere Verbindung des Dekorpapiers mit der Holzwerkstoffplatte herstellen. Somit werden auch in den Bereichen der Holzwerkstoffplatte, in denen das flüssige Verstärkungsmittel vorliegt, partielle Ablösungserscheinungen, wie bspw. Delaminierungen zwischen Dekorpapier und Holzwerkstoffplatte verhindert.

Die Eindringtiefe des Verstärkungsmittels wird ausgehend von der Oberfläche der Oberseite der Holzwerkstoffplatte, in vertikale Richtung zur Oberfläche der Rückseite gemessen. Unter der Eindringtiefe wird somit der vertikale Abstand zwischen der Oberfläche der Oberseite und dem Verstärkungsmittel verstanden. Der Dampfstoß trägt das Verstärkungsmittel bis in eine Eindringtiefe ein, die bis zu 10 %, bevorzugt bis zu 25 %, besonders bevorzugt zwischen 15 % und 75 %, vorteilhaft zwischen 20 % und 60 % und besonders vorteilhaft zwischen 30 % und 65 % der Strecke zwischen der Oberfläche der Oberseite und der Oberfläche der Rückseite entspricht.

Die benötigte Eindringtiefe ist abhängig von der Aufgabenstellung. Soll ausschließlich ein Schutz vor Feuchtigkeit der späteren Paneelfuge erreicht werden, ist eine geringe Eindringtiefe ausreichend, da nur ein Schutz vor eindringendem Wasser über die Oberseite vorhanden sein muss. Für eine Verfestigung des bspw. Profilbereiches ist ggf. eine deutlich größere Eindringtiefe notwendig.

Die Eindringtiefe ist ferner abhängig von der Viskosität der Flüssigkeit. Je weniger viskos die Flüssigkeit ist, umso leichter dringt sie in die Holzwerkstoffplatte ein. Das heißt, dass bei einer hoch viskosen Flüssigkeit ein besonders kräftiger und intensiver Dampfstoß notwendig ist, um das Verstärkungsmittel auf die gleiche Eindringtiefe einzutragen, wie bei einer gering viskosen Flüssigkeit. Bevorzugt werden gering viskose Flüssigkeiten als Verstärkungsmittel verwendet.

Die Stärke und Intensität des Dampfstoßes ist abhängig von der Menge der Feuchtigkeit, die verdampft wird. Wie bereits beschrieben, kann die im Dekorpapier enthaltene Feuchtigkeit verwendet werden, um einen Dampfstoß zu erzeugen. Besonders bevorzugt wird ein Dekorpapier verwendet, dass vor dem Verpressen eine Restfeuchte von bis zu 15 %, bevorzugt bis zu 10 %, besonders bevorzugt zwischen 2 % und 12 %, vorzugsweise zwischen 4 % und 10 % und vorteilhaft zwischen 6 % und 8 % aufweist.

Die Restfeuchte errechnet sich aus der Formel:

$$\frac{Feuchtegewicht - Trockengewicht}{Feuchtegewicht} = Restfeuchte$$

Unter dem Trockengewicht wird hierbei das Gewicht des bis zur Gewichtskonstanz gedarrten Dekorpapiers verstanden.

Beim Verpressen wird die im Papier vorhandene Restfeuchte aufgrund der Wärme und des Pressdrucks zumindest teilweise verdampft, aus dem Dekorpapier ausgetrieben und in die Holzwerkstoffplatte eingetragen, da nur hier Raum für das Aufnehmen des Dampfes ist. Die benötigte Menge an Feuchtigkeit im Dekorpapier ist abhängig von dem verwendeten flüssigen Verstärkungsmittel und von der notwendigen bzw. zu erreichenden Eindringtiefe des flüssigen Verstärkungsmittels in die Holzwerkstoffplatte.

Das zusätzliche Aufbringen von Feuchtigkeit ist partiell, d. h. abschnittsweise möglich, sodass nur in dem Bereich zusätzliche Feuchtigkeit in die Holzwerkstoffplatte eingebracht wird, in dem auch das flüssige Verstärkungsmittel in der Holzwerkstoffplatte vorhanden ist. Auf diese Weise können besonders tiefe Eindringtiefen des Verstärkungsmittels erreicht werden und in Kombination mit dem aktiven Agens Silan werden Delaminierungen aufgrund der erhöhten Feuchtigkeit und der guten Reaktionsfähigkeit des Agens mit Wasser verhindert.

Das Dekorpapier wird unmittelbar auf die Oberseite der Holzwerkstoffplatte und auf dem aufgetragenen Verstärkungsmittel angeordnet. Unter unmittelbar kann sowohl eine zeitliche als auch eine räumliche Komponente verstanden werden.

Unter räumlich unmittelbar ist zu verstehen, dass zwischen dem Dekorpapier und der Oberseite der Holzwerkstoffplatte und dem hierauf aufgetragenen Verstärkungsmittel keine weiteren Schichten aufgetragen sind. Das Dekorpapier wird somit ausschließlich über ein Harz, mit dem es bspw. getränkt wurde auf die Holzwerkstoffplatte geklebt bzw. laminiert. Der besondere Vorteil ist, dass die Feuchtigkeit des Dekorpapiers besonders leicht und ohne weitere Schichten zu durchdringen, vom Dekorpapier in die Holzwerkstoffplatte eindringen kann.

Unter zeitlich unmittelbar wird ein zeitlich direkt an das Auftragen des Verstärkungsmittels anschließendes Auflegen des Dekorpapiers auf die Oberseite der Holzwerkstoffplatte und somit auch auf das Verstärkungsmittel verstanden. Der zeitliche Abstand zwischen dem Auftragen des Verstärkungsmittels und dem Auflegen des Dekorpapiers ist besonders kurz und erfolgt innerhalb eines Zeitraums von 1 Sekunde bis 30 Sekunden, bevorzugt innerhalb von 5 Sekunden bis 20 Sekunden, besonders bevorzugt innerhalb von 10 Sekunden bis 15 Sekunden. Hierdurch wird ein vorzeitiges Aushärten, Angelieren oder Vernetzen des Verstärkungsmittels verhindert.

Das Vorvernetzen bzw. Aushärten des Verstärkungsmittels vor dem Eintrag in die Holzwerkstoffplatte durch den Dampfstoß wird auch dadurch verhindert, dass die zeitliche Abfolge der einzelnen Verfahrensschritte direkt aufeinander folgend ablaufen. Das Auftragen des flüssigen Verstärkungsmittels bis zum Dampfstoß in der Presse erfolgen somit innerhalb von 30 Sekunden, bevorzugt innerhalb von 20 Sekunden, besonders bevorzugt innerhalb eines Zeitraums von 10 bis 15 Sekunden.

Durch die Steuerung des zeitlichen Abstandes zwischen dem Auftragen des Verstärkungsmittels und dem Dampfstoß in der Presse ist es möglich, die Tiefe des Einsickerns des flüssigen Verstärkungsmittels zu beeinflussen. Dies ist insbesondere vorteilhaft, wenn nur eine besonders geringe Menge an Feuchtigkeit durch den Dampfstoß eingebracht werden darf und/ oder das Verstärkungsmittel besonders tief in die Holzwerkstoffplatte eindringen soll. Besonders bevorzugt ist es, wenn das Verstärkungsmittel bis zu 0,1 mm, bevorzugt bis zu 1 mm, besonders bevorzugt zwischen 0,2 mm und 2 mm, vorteilhaft zwischen 0,1 mm und 1,5 mm und besonders vorteilhaft zwischen 1 mm und 2 mm in die Oberseite einsickert, bevor der Dampfstoß auf das Verstärkungsmittel einwirkt. Es wird bevorzugt, dass möglichst wenig Verstärkungsmittel noch an der Oberfläche steht, damit nicht das Papier imprägniert wird.

Hierdurch kann der Bedarf bzw. die Menge an Feuchtigkeit, die Intensität und die Stärke des Dampfstoßes vermindert werden. Das heißt, dass eine niedrigere Feuchte im Dekorpapier vorhanden sein muss, bzw. weniger Feuchtigkeit in die Holzwerkstoffplatte eingeführt wird, jedoch trotzdem die gleiche Eindringtiefe des Verstärkungsmittels in die Holzwerkstoffplatte erreicht werden kann.

Das oberhalb des Dekors angeordnete Overlay kann aus einem harzgetränkten Overlaypapier bestehen. Besonders bevorzugt wird auf das Dekor jedoch ein flüssiges Overlay aufgetragen, das wie ein harzgetränktes Overlaypapier unter Einwirkung von Druck und Wärme ausgehärtet wird.

In dem Verfahren werden bevorzugt Holzfaserplatten eingesetzt, deren Rohdichte ohne Verstärkungsmittel bis zu 850 kg/m$^3$, bevorzugt bis zu 700 kg/m$^3$, besonders bevorzugt bis zu 600 kg/m$^3$, vorteilhaft zwischen 600 kg/m$^3$ und 800 kg/m$^3$ oder vorzugsweise zwischen 650 kg/m$^3$ und 750 kg/m$^3$ beträgt. Definitionsgemäß werden hierbei Holzwerkstoffplatten aus Fasern, d.h. Platten, die aus Pflanzenfasern hergestellt werden, oberhalb eine Rohdichte von 800kg/m$^3$ als HDF, unterhalb von 800 kg/m$^3$ als MDF-Platten und Holzwerkstoffplatten aus Fasern unterhalb 700 kg/m$^3$ als leichte MDF-Platten bezeichnet.

Durch das Verfahren können die besonders gefährdeten Bereiche der Holzwerkstoffplatte verstärkt werden, so dass bspw. auch MDF-Platten oder leichte MDF-Platten die notwendigen Festigkeiten für beispielsweise die Profilkanten am herzustellenden Paneel aufweisen.

Die Verwendung von MDF-Platten bzw. leichten MDF-Platten hat den Vorteil, dass weniger Rohmaterial zur Herstellung der Platte eingesetzt werden muss, wodurch die Kosten entscheidend gesenkt werden können. Außerdem sind MDF-Platten und leichte MDF-Platten bei der Verarbeitung und dem Verlegen der hieraus hergestellten Paneele deutlich leichter und damit besser zu Handhaben als aus dem Stand der Technik bekannte HDF- oder HF-Platten.

Erfindungsgemäß besteht ein Wand-, Decken- oder Fußbodenpaneel aus einer Holzwerkstoffplatte mit einer Oberseite und einer der Oberseite gegenüberliegenden Rückseite und mit abschnittsweise eingebrachten Verstärkungen, wobei im Bereich der Verstärkung ein ausgehärtetes Verstärkungsmittel angeordnet ist und das Verstärkungsmittel mindestens ein aktives Agens aus der Gruppe der Silane enthält. Die erfindungsgemäßen Paneele werden nach dem vorbeschriebenen Verfahren hergestellt.

Paneele sind zumeist plattenförmige Werkstoffe, die neben einer unterschiedlichen Anzahl von Kantenflächen zwei Hauptoberflächen aufweisen. Die Hauptoberflächen werden zumeist als Oberseite und als Rückseite bzw. Unterseite bezeichnet. Unter der Oberseite wird die Seite verstanden, die im Gebrauch sichtbar ist. Die Rückseite ist zumeist die Seite, die im Gebrauch dem Fußboden, der Wand oder der Decke zugewandt ist. Anzumerken ist, dass es ggf. auch beidseitig sichtbare Paneele gibt, wobei auch hier eine Seite als Oberseite und eine Seite als Rückseite zu verstehen sind.

Definitionsgemäß sind die Kanten eines Paneels von der Oberseite bzw. der Rückseite mit umfasst. Die genaue Zuordnung hierbei ist abhängig von der geometrischen Ausgestaltung eines beispielsweise angebrachten Kantenprofils. Anhaltspunkt hierfür kann beispielsweise die Sichtbarkeit einer Kante, eines Profils an einer Kante oder eine Oberfläche eines Profils sein, das derart ausgerichtet ist, dass es mit der Oberseite gemeinsam sichtbar ist.

Der besondere Vorteil eines Paneels mit einem Verstärkungsmittel, das ein aktives Agens aus der Gruppe der Silane enthält, ist, dass Silane einen besonders hohen Vernetzungsgrad und eine besonders gute Anbindung des Verstärkungsmittels an die Holzwerkstoffplatte bewirken.

Durch die Verwendung von Silan als aktives Agens wird eine zumindest abschnittsweise besonders feste und dauerhafte Verbindung des Dekors mit der Holzwerkstoffplatte erreicht. Somit werden Delaminierungen zwischen dem Dekor und der Holzwerkstoffplatte insbesondere im Bereich des ausgehärteten Verstärkungsmittels wirkungsvoll verhindert.

Gemäß einer besonders bevorzugten Weiterbildung der Erfindung ist die Dichte der Holzwerkstoffplatte in den Bereichen mit Verstärkungsmitteln um bis zu 5 %, bevorzugt um bis zu 10 %, besonders bevorzugt zwischen 10 % und 15 % und vorteilhaft zwischen 15 % und 50 % höher, als die mittlere Dichte der Holzwerkstoffplatte ohne Verstärkungsmittel. Hierdurch kann bspw. besonders vorteilhaft die Hygroskopizität der mit Verstärkungsmittel versehenden Bereiche herabgesetzt sein.

Außerdem kann bspw. mit der bevorzugten Erhöhung der Dichte auch eine Erhöhung der Festigkeit und/ oder Stabilität einhergehen. Dies betrifft insbesondere die Querzugfestigkeit der mit Verstärkungsmittel versehenden Bereiche der Holzwerkstoffplatte. Dies ist bspw. besonders vorteilhaft beim Fräsen der Profile, da durch eine erhöhte Querzugfestigkeit der Holzwerkstoffplatte ein Ausreißen der Kanten verhindert wird. Das erfindungsgemäße Paneel zeichnet sich dadurch aus, dass die Querzugfestigkeit der Holzwerkstoffplatte im Bereich des Verstärkungsmittels gegenüber den Bereich ohne Verstärkungsmittel um bis zu 25%, bevorzugt bis zu 50%, besonders bevorzugt bis 100% vorteilhaft zwischen 30% und 75%, besonders vorteilhaft zwischen 40% und 65% und vorzugsweise zwischen 25% und 50% höher ist.

Sowohl aufgrund der erhöhten Dichte als auch aufgrund der erhöhten Festigkeiten kann in besonders vorteilhafter Weise eine Holzwerkstoffplatte mit geringer Rohdichte, beispielsweise eine MDF-Platte oder eine leichte MDF-Platte für Einsatzzwecke verwendet werden, bei der die im Gebrauch besonders belasteten Bereiche und hier insbesondere die an einem Paneel angefrästen Profile, mit Verstärkungsmitteln versehen sind.

Eine Vorrichtung zum Erzeugen einer Holzwerkstoffplatte mit mindestens einem verstärkten Bereich mit einer Oberseite und einer der Oberseite gegenüberliegenden Rückseite, weist eine Vorrichtung zum Bereitstellen von Holzwerkstoffplatten, mindestens eine Vorrichtung zum Anordnen von mindestens einem Dekorpapier und mindestens einem Overlay auf der Oberseite der Holzwerkstoffplatte, eine Presse, insbesondere eine Kurztaktpresse zum Verpressen der Holzwerkstoffplatte mit dem Dekorpapier und dem Overlay, mindestens eine Vorrichtung zum Zu- und Abführen von plattenförmigen Holzwerkstoffen von/zu der Presse auf, wobei eine Vorrichtung zum abschnittsweise Auftragen eines flüssigen Verstärkungsmittels auf die Holzwerkstoffplatte angeordnet ist und die Vorrichtung zum Auftragen des flüssigen Verstärkungsmittels so angeordnet ist, dass das Verstärkungsmittel vor dem Dekorpapier und dem Overlay auf die Holzwerkstoffplatte aufgetragen wird.

Als Vorrichtung zum Auftragen eines flüssigen Verstärkungsmittels können bekannte und übliche Vorrichtungen wie beispielsweise Walzen, Sprühvorrichtungen, Vorrichtungen zum Aufrakeln, Aufstreichen Auftupfen oder Aufgießen verwendet werden.

Eine solche Vorrichtung ermöglicht es, ein flüssiges Verstärkungsmittel unmittelbar vor dem Auflegen eines Dekorpapiers und eines Overlays auf die Holzwerkstoffplatte aufzutragen. Ferner ermöglicht die erfinderische Vorrichtung das Einbringen eines flüssigen Verstärkungsmittels in eine Holzwerkstoffplatte während eines Herstellungsprozesses für ein Paneel, ohne den Herstellungsprozess zu verlangsamen oder die Qualität des Paneels negativ zu beeinflussen.

Weitere mögliche Ausgestaltungen umfassen bspw.:

- Eine mehrtagige Presse und/oder Zuführung, wobei sich ggf. die Taktzeiten zwischen Auftragen des Verstärkungsmittels und Eindringen des Dampfstoßes verlängert.
- Auftragen eines Feuchtigkeitsfilms/Feuchtigkeitsnebels auf die Oberseite oder Rückseite der Holzwerkstoffplatte zum Erzeugen eines besonders kräftigen und intensiven Dampfstoßes.
- Einbringen eines Verstärkungsmittels in die Holzwerkstoffplatte durch zumindest abschnittsweises Auftragen eines Verstärkungsmittels auf einen Gegenzug und/oder auf die Rückseite der Holzwerkstoffplatte und Erzeugen eines Dampfstoßes ausgehend vom Gegenzug, der das Verstärkungsmittel in die Holzwerkstoffplatte einträgt.
- Verwendung eines zähflüssigen oder pastösen Verstärkungsmittels insbesondere bei der Anwendung auf der Rückseite der Holzwerkstoffplatte.

Im Folgenden werden Ausführungsbeispiele anhand von Figuren näher erläutert. Es zeigen:

Fig. 1   einen schematischen Ablauf des Verfahrens;

Fig. 2   eine schematische Querschnittsdarstellung einer Ausführungsform einer Holzwerkstoffplatte nach dem Verpressen und vor dem Aufschneiden.

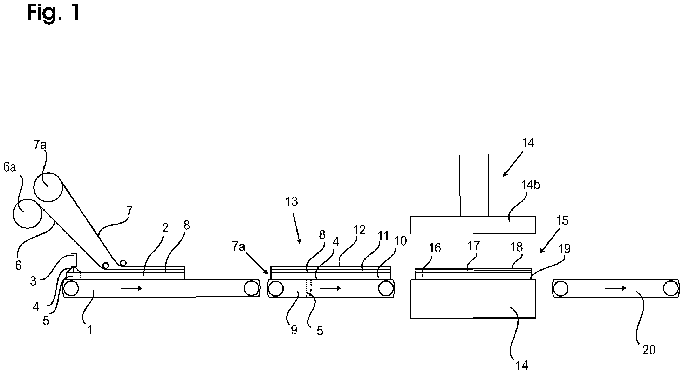

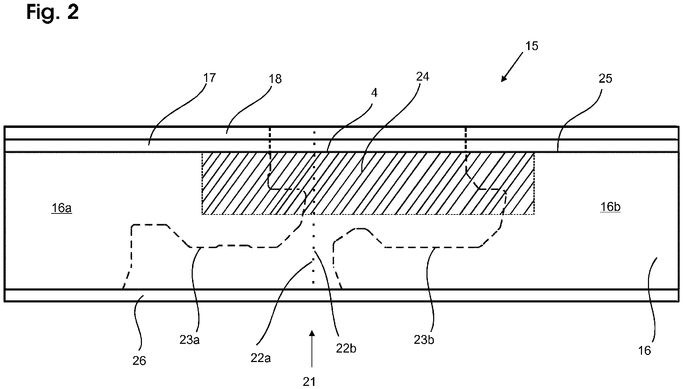

Fig. 1 zeigt ein erstes Förderband 1, das unterhalb einer Beschichtungsvorrichtung 1a angeordnet ist. Auf dem ersten Förderband 1 liegt eine erste Faserplatte 2 auf. Die erste Faserplatte 2 wird mittels einer Sprühvorrichtung 3 mit einem flüssigen Verstärkungsmittel 4 abschnittsweise besprüht. Es werden ausschließlich die Bereiche 5 der Faserplatte 2 besprüht, die im später ausgesägten Paneel profiliert werden (siehe Fig.2).

Das verwendete Dekorpapier 6 weist eine Restfeuchte von 6,5% auf. Diese reicht aus, um das Verstärkungsmittel 4 bis in eine Eindringtiefe von 50% in die Faserplatte 2 einzutragen. Als Verstärkungsmittel 4 wird ein organofunktionalisiertes Silan, z.B. mit der allgemeinen Form $R^1_s\,R^2_r\,SiY_{(4-s-r)}$, verwendet.

Im Anschluss an das Aufsprühen werden unmittelbar ein mit Melaminharz imprägniertes Dekorpapier 6 von der Dekorpapierrolle 6a und ein mit Melaminharz imprägniertes Overlay 7 von einer Rolle 7a auf die Oberseite 8 der ersten Holzwerkstoffplatte 2 aufgelegt.

Weiter zeigt die Fig. 1 ein zweites Förderband 9, auf dem eine zweite Faserplatte 10 aufliegt. Das Förderband 9 kann unmittelbar an das Förderband 1 anschließen. Die zweite Faserplatte 10 wurde bereits mit dem flüssigen Verstärkungsmittel 4 abschnittsweise im Bereich 5 besprüht. Oberhalb des Verstärkungsmittels 4 liegt ein mit Melaminharz getränktes zweites Dekorpapier 11 und ein ebenfalls mit Melaminharz getränktes zweites Overlay 12 auf der Oberseite 8 der zweiten Holzwerkstoffplatte 9 auf. Die zweite Faserplatte 10, das zweite Dekorpapier 11 und das zweite Overlay 12 bilden ein Sandwich 13. Das Sandwich 13 ist bereit, zum Verpressen in die geöffnete Kurztaktpresse 14 einzufahren. Die Dekorpapiere 6 und 11, auf den nicht verpressten Faserplatten 2, 10, weisen eine Restfeuchte von 6% +/- 1% auf.

Die Fig. 1 zeigt weiter eine Kurztaktpresse 14, mit einer unteren beheizten Pressplatte 14a und mit einer oberen beheizten Pressplatte 14b. Die Presse 14 ist geöffnet und auf der unteren Pressplatte 14a liegt ein fertig verpresstes Laminat 15 auf, bestehend aus einer Faserplatte 16 mit abschnittsweise aufgetragenem und ausgehärtetem Verstärkungsmittel (nicht dargestellt), einem aufgepressten Dekorpapier 17 und einem Overlay 18. Alle dargestellten Faserplatten 2, 10 und 16 weisen eine Rohdichte von ca. 700 kg/m$^3$ auf. Außerdem ist jeweils auf der Rückseite 19 der Faserplatten 2, 10, 16, die jeweils dem Förderband 1, 6 oder der unteren Pressplatte 14a zugewandt sind, ein Gegenzug (hier nicht dargestellt) angeordnet.

Im Betrieb wird das fertig verpresste Laminat 15 aus der geöffneten Kurztaktpresse 14 herausgefahren. Das vorbereitete Laminat-Sandwich 13 auf dem zweiten Förderband 9 wird gleichzeitig oder zeitversetzt in die Kurztaktpresse 14 eingefahren. Anschließen wird die Kurztaktpresse 14 geschlossen und verpresst bei 20 bar Druck und einer Temperatur von 200°C in 10 Sekunden das Laminat-Sandwich 13. Grundsätzlich kann ein Druck von 20 bar bis 40 bar und eine Temperatur von 180°C bis 250°C an der Kurztaktpresse eingestellt werden. Die Pressdauer variiert von 6 Sekunden bis 11 Sekunden.

Aufgrund des Pressdrucks und der Wärme wird die Restfeuchte im zweiten Dekorpapier 11 verdampft, es entsteht Wasserdampf (nicht dargestellt), der als Dampfstoß (nicht dargestellt) ausgehend vom zweiten Dekorpapier 11 in die zweite Faserplatte 10 eindringt. Dieser Dampfstoß trägt das flüssige Verstärkungsmittel in die zweite Faserplatte 10 hin ein. Aufgrund der Wärme und der Feuchtigkeit des Dampfstoßes härtet das Verstärkungsmittel während des Pressvorgangs in der zweiten Holzwerkstoffplatte 10 aus.

Nach Abschluss des Pressvorganges öffnet sich die obere Pressplatte 14b der Kurztaktpresse 14. Das fertig verpresste Laminat 15 kann aus der Kurztaktpresse 14 über ein drittes Förderband 20 herausgefahren werden.

Zwischen dem Aufsprühen des Verstärkungsmittels 4 und dem Auflegen des Dekorpapiers 6 auf die Oberseite 8 der Holzwerkstoffplatte 2 vergehen ca. 7 Sekunden. Der Verfahrensablauf vom Aufsprühen des Verstärkungsmittels 4 bis zum Eindringen des Dampfstoßes dauert 25 Sekunden +/- 2 Sekunden.

Alternativ zur Darstellung können mehrere Sprühvorrichtungen 3 zum Aufsprühen des flüssigen Verstärkungsmittels 4 angeordnet sein. Auch ist es möglich, die Sprühvorrichtung 3 beweglich auszugestalten, so dass die Sprühvorrichtung 3 beim Sprühen verfahren werden kann. Alternativ zur Sprühvorrichtung 3 ist es auch denkbar, bspw. Vorrichtung zum Aufgießen, Aufwalzen oder Aufstreichen anzuordnen.

Fig. 2 zeigt den Querschnitt eines aus der Kurztaktpresse 14 ausgefahrenen fertig verpressten Laminats 15. Oberhalb der Faserplatte 16 wird das Papierdekor 17 und das Overlay 18 gezeigt. Unterhalb der Faserplatte 16 ist der Gegenzug 26 angeordnet. Zum Herstellen von Paneelen wird das Laminat 15 in kleinere Bestandteile, die Paneele 15a, 15b aufweisen, zersägt. Die Position des Sägeschnitts zum Aufsägen des Laminats 15 ist durch eine vertikal ausgerichtete gepunktete Linie 21 angedeutet.

Im Anschluss an das Zersägen des Laminats 15 werden die jeweiligen Paneele 15a, 15b an ihren Längskanten 22a, 22b profiliert. Die Form und Position, die die Profile an den Längskanten 22a, 22b einnehmen, sind durch die gestrichelten Linien 23 angedeutet.

Der Bereich 24 des Laminats 15, in dem das ausgehärtete Verstärkungsmittel 4 vorliegt, ist durch eine Schraffur schematisch angedeutet. Dieser Bereich erstreckt sich in der Eindringtiefe ausgehend von der der Oberseite 25 der Faserplatte 16 bis in eine Tiefe von ca. 50%, d. h. bis ca. in die Plattenmitte. Die Breite des mit Verstärkungsmittel 4 versehenden Bereichs 24 ist so breit gewählt, dass nach dem Aufschneiden des Laminats 15 und dem Profilieren der Längskanten 22a, 22b der Paneele 16a, 16b die Profile 23a, 23b zumindest teilweise mit ausgehärteten Verstärkungsmitteln 4 versehen sind. Hierdurch wird eine besonders hohe Festigkeit und Stabilität der zur Oberseite ausgerichteten Abschnitte der Profile 23a, 23b erreicht.

Die verlegten und am Profil 23a, 23b miteinander verbundenen Paneele 15a, 15b sind im Gebrauch gegen von der Oberseite 25 aus eindringende Feuchtigkeit geschützt, so dass ein Aufquellen der Holzfasern im Bereich der Profile 23a, 23b wirksam verhindert wird.

**Patentansprüche**

1. Wand-, Decken- oder Fußbodenpaneel aus einer Holzwerkstoffplatte (2) mit einer Oberseite (8) und einer der Oberseite (8) gegenüberliegenden Rückseite (19) und mit abschnittsweise eingebrachten Verstärkungen, wobei

   - im Bereich (5) der Verstärkung ein ausgehärtetes Verstärkungsmittel (4) angeordnet ist, **dadurch gekennzeichnet, dass**
   - das Verstärkungsmittel (4) mindestens ein aktives Agens aus der Gruppe der Silane enthält,
   - wobei das Verstärkungsmittel nur in den Bereichen der Holzwerkstoffplatte eingebracht ist, in denen eine Kante des Paneels oder ein Profil angefräst ist.

2. Paneel nach Anspruch 1, **dadurch gekennzeichnet, dass** die Dichte der Holzwerkstoffplatte (2) in den Bereichen (5) mit Verstärkungsmittel (4) um bis 5 %, bevorzugt um bis zu 10 %, besonders bevorzugt zwischen 10 % und 25 % und vorteilhaft zwischen 15 % und 50 % höher ist, als die mittlere Dichte der Holzwerkstoffplatte ohne Verstärkungsmittel.

3. Paneel nach Anspruch 1, **dadurch gekennzeichnet, dass** die Querzugfestigkeit der Holzwerkstoffplatte (2) im Bereich (5) des Verstärkungsmittels (4) gegenüber dem Bereich (5) ohne Verstärkungsmittel um bis zu 25 %, bevorzugt bis zu 50 %, besonders bevorzugt bis 100 %, vorteilhaft zwischen 30 % und 75 %, besonders vorteilhaft zwischen 40 % und 65 % und vorzugsweise zwischen 25 % und 50 % höher ist.

**Claims**

1. A wall, cover or floor panel made of a composite wood board (2) with a top side (8) and a rear side (19) lying opposite the top side (8) and with reinforcements incorporated in sections, wherein

   - in the area (5) of the reinforcement, a hardened reinforcing means (4) is arranged, **characterized in that**
   - the reinforcing means (4) contains at least one active agent from the group of silanes,
   - wherein the reinforcing means is only incorporated in the areas of the composite wood board, into which an edge of the panel or a profile is milled.

2. The panel according to claim 1, **characterized in that** the density of the composite wood board (2) in the areas (5) with reinforcing means (4) is higher by up to 5%, preferably by up to 10%, particularly preferably between 10% and 25% and advantageously between 15% and 50% higher than the average density of the composite wood board without reinforcing means.

3. The panel according to claim 1, **characterized in that** the transverse tensile strength of the composite wood board (2) is higher in the area (5) of the reinforcing means (4) compared to the area (5) without reinforcing means by up to 25%, preferably by up to 50%, particularly preferably up to 100%, advantageously between 30% and 75%, particularly advantageously between 40% and 65% and preferably between 25% and 50%.

**Revendications**

1. Panneau de mur, de plafond ou de plancher, constitué d'une plaque à base de bois (2) avec une face supérieure (8) et une face arrière (19) opposée à la face supérieure (8), et avec des renforts intégrés par tronçons, dans lequel

   - un moyen de renfort durci (4) est disposé dans la région (5) du renfort, **caractérisé en ce que**
   - le moyen de renfort (4) contient au moins un agent actif issu du groupe des silanes,
   - dans lequel le moyen de renfort n'est intégré que dans les régions de la plaque à base de bois dans lesquelles un bord du panneau ou un profil est chanfreiné.

2. Panneau selon la revendication 1, **caractérisé en ce que** la densité de la plaque à base de bois (2) dans les régions (5) comportant un moyen de renfort (4) est supérieure jusqu'à 5%, de préférence jusqu'à 10%, de façon particulièrement préférentielle de 10% à 25% et avantageusement de 15% à 50% par rapport à la densité moyenne de la plaque à base de bois sans moyen de renfort.

3.  Panneau selon la revendication 1, **caractérisé en ce que** la résistance à la traction transversale de la plaque à base de bois (2) dans la région (5) du moyen de renfort (4) est supérieure jusqu'à 25%, de préférence jusqu'à 50%, de façon particulièrement préférentielle jusqu'à 100%, avantageusement de 30% à 75%, de façon particulièrement avantageuse de 40% à 65% et préférentiellement de 25% à 50%, par rapport à la région (5) exempte de moyen de renfort.

## Fig. 1

**Fig. 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 03012224 A1
- DE 102008038749 B3
- EP 2036689 A1